(19)

Europäisches Patentamt

European Patent Office

Office européen des brevets

(11) **EP 3 032 735 A1**

(12) **EUROPEAN PATENT APPLICATION**
published in accordance with Art. 153(4) EPC

(43) Date of publication:
**15.06.2016 Bulletin 2016/24**

(51) Int Cl.:
**H02P 29/00** *(2016.01)*

(21) Application number: **13890975.9**

(22) Date of filing: **09.08.2013**

(86) International application number:
**PCT/JP2013/071673**

(87) International publication number:
**WO 2015/019495 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Yaskawa Denki Kitakyushu-shi, Fukuoka 806-0004 (JP)**

(72) Inventors:
• **TAKASE, Yoshiyasu Kitakyushu-shi Fukuoka 806-0004 (JP)**

• **NAKAMURA, Hiroshi Kitakyushu-shi Fukuoka 806-0004 (JP)**
• **KUBOTA, Yoshiaki Kitakyushu-shi Fukuoka 806-0004 (JP)**
• **MAMBA, Takashi Kitakyushu-shi Fukuoka 806-0004 (JP)**

(74) Representative: **Grünecker Patent- und Rechtsanwälte PartG mbB Leopoldstraße 4 80802 München (DE)**

(54) **MOTOR DRIVE SYSTEM AND MOTOR CONTROL DEVICE**

(57)      A motor control apparatus (4; 4A; 4B) according to an embodiment includes a torque current controller (76), an excitation current controller (75), and an estimation unit (15). The torque current controller (76) performs torque current control on a motor (2; 90; 90C) based on a deviation ($Td_{err}$) between a feedback signal (FB) based on a detection result of a sensor (3; 93) that can detect torque or acceleration of the motor (2; 90; 90C) and a torque current reference ($Iq^*$). The excitation current controller (75) performs excitation current control on the motor (2; 90; 90C) based on an excitation current reference ($Id^*$) on which a high-frequency current reference ($Id_{hfi}$) is imposed. The estimation unit (15) estimates at least one of a position and a velocity of the motor (2; 90; 90C) based on the deviation ($Id_{err}$) and the high-frequency current reference ($Id_{hfd}$.

## FIG.3

EP 3 032 735 A1

**Description**

Field

The present invention relates to a motor drive system and a motor control apparatus.

Background

Conventionally, when conducting drive control of a motor, methods of detecting the position and the velocity of the motor by using a position sensor such as an encoder (see Patent Literature 1, for example) and methods of obtaining the position and the velocity of the motor by the voltage and current of the motor (see Patent Literature 2, for example) have been known.

Citation List

Patent Literature

Patent Literature 1: Japanese Patent Application Laid-open No. 2009-095154
Patent Literature 2: Japanese Patent Application Laid-open No. 2012-228128

Summary

Technical Problem

The methods that use the position sensor such as the encoder, however, are difficult to improve environmental durability such as vibration and shock. Although the methods that obtain the position and the velocity of the motor by the voltage and the current of the motor can improve the environmental durability, there are many restrictions on the type and velocity control range of applicable motors.
An object of one aspect of the embodiments, in view of the above-described situations, is to provide a motor drive system and a motor control apparatus that are novel and excellent in environmental durability.

Solution to Problem

A motor control apparatus according to an aspect of an embodiment includes a torque current controller, an excitation current controller, and an estimation unit. The torque current controller performs torque current control on a motor based on a deviation between a feedback signal based on a detection result of a sensor that can detect torque or acceleration of the motor and a torque current reference. The excitation current controller performs excitation current control on the motor based on an excitation current reference on which a high-frequency current reference is superimposed. The estimation unit estimates a position or velocity of the motor based on the deviation between the feedback signal and the torque current reference and on the high-frequency current reference.

Advantageous Effects of Invention

According to one aspect of the embodiments, the motor drive system and the motor control apparatus that are novel and excellent in environmental durability can be provided.

Brief Description of Drawings

FIG. 1 is a diagram illustrating one example of a robot to which a motor drive system according to an embodiment is applied.
FIG. 2 is a block diagram illustrating an example of the configuration of the motor drive system in the embodiment.
FIG. 3 is a diagram illustrating another arrangement of a torque sensor.
FIG. 4 is a diagram illustrating a sensor model when an inter-shaft torque sensor illustrated in FIG. 2 is approximated as a torsion spring.

FIG. 5 is a block diagram illustrating an example of the configuration of a controller of the motor control apparatus illustrated in FIG. 2.

FIG. 6A is a chart (part 1) illustrating the relation among a high-frequency current reference, a high frequency component, and a phase error.

FIG. 6B is a chart (part 2) illustrating the relation among the high-frequency current reference, the high frequency component, and the phase error.

FIG. 7 is a block diagram illustrating an example of the configuration of a motor drive system according to another embodiment.

FIG. 8 is a diagram illustrating the configuration of a motor drive system using a linear motor.

FIG. 9 is a block diagram illustrating an example of the configuration of a controller of the linear motor illustrated in FIG. 8.

FIG. 10 is a diagram illustrating the configuration of another motor drive system using a linear motor.

FIG. 11 is a diagram illustrating the configuration of another motor drive system using a linear motor.

FIG. 12 is a diagram illustrating the configuration of another motor drive system using a linear motor. Description of Embodiments

With reference to the accompanying drawings, the following describes in detail exemplary embodiments of a motor drive system and a motor control apparatus disclosed in the present application. Note that the invention is not intended to be limited by the following embodiments described.

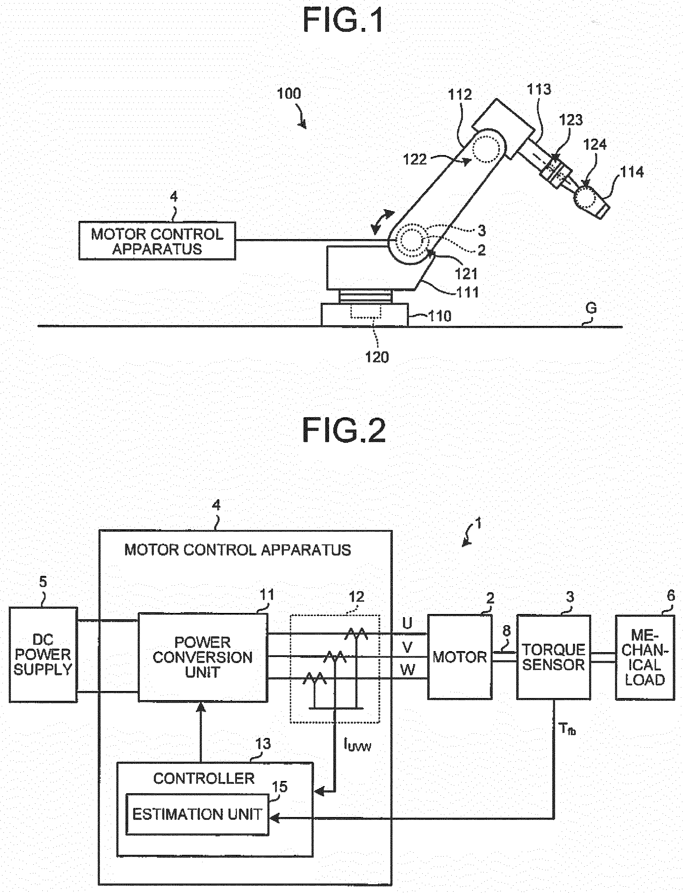

FIG. 1 is a diagram illustrating one example of a robot 100 to which a motor drive system according to an embodiment is applied. As illustrated in FIG. 1, the robot 100 in the embodiment includes a base 110, a trunk portion 111, a first arm portion 112, a second arm portion 113, and a wrist portion 114.

The trunk portion 111 is mounted on the base 110 fixed to an installation surface G via a revolving superstructure 120 to be free to revolve in the horizontal direction. As for the first arm portion 112, the base end is coupled to the trunk portion 111 and the distal end is coupled to the second arm portion 113. The wrist portion 114 is provided on the distal end of the second arm portion 113 and, at the distal end of the wrist portion 114, an end effector (not depicted) depending on purposes is coupled to.

The first arm portion 112, the second arm portion 113, and the wrist portion 114 are coupled rotatably around the shafts via the revolving superstructure 120 and a first joint portion 121 to a fourth joint portion 124. The revolving superstructure 120 and the first to fourth joint portions 121 to 124 have respective actuators built-in that drive the first arm portion 112, the second arm portion 113, and the wrist portion 114 that are the movable members.

In each actuator, a three-phase AC motor 2 (described as motor 2, hereinafter) and a torque sensor 3 are included, and the motor 2 and the torque sensor 3 are electrically connected to a motor control apparatus 4. The following describes a specific example of a motor drive system including the motor 2, the torque sensor 3, and the motor control apparatus 4.

FIG. 2 is a block diagram illustrating an example of the configuration of the motor drive system in the embodiment. As illustrated in FIG. 2, a motor drive system 1 in the embodiment includes the motor 2, the torque sensor 3, and the motor control apparatus 4. The motor 2 is a permanent magnet synchronous motor such as an interior permanent magnet (IPM) motor and a surface permanent magnet (SPM) motor, for example. On an output shaft 8 of such a motor 2, a mechanical load 6 is coupled to via the torque sensor 3.

The motor 2 may be not only a motor having a drive function but also a motor generator and a generator that have power generation performance. For example, the motor 2 may be a generator coupled to a rotor and others of a windmill. The mechanical load 6 is the first arm portion 112 and others illustrated in FIG. 1, for example.

The torque sensor 3 is provided between the output shaft 8 of the motor 2 and the mechanical load 6, detects the torque that is applied to the output shaft 8 of the motor 2, and outputs a torque detection signal $T_{fb}$ corresponding to the detection result. The torque sensor 3 may be coupled to the motor 2 via a reduction gear, and may be incorporated into the motor 2 and the reduction gear in an integrated manner.

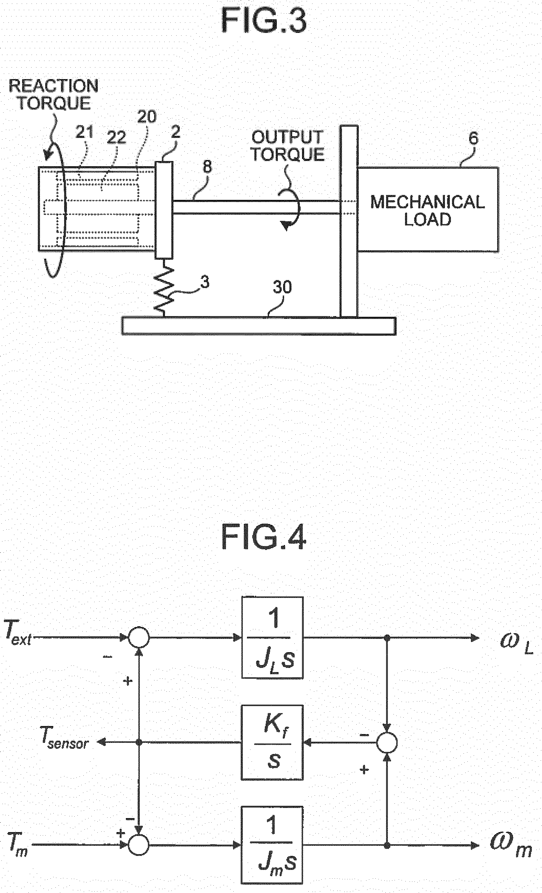

The torque sensor 3 only needs to be able to detect the torque of the motor 2, and thus the measurement site may be other than the output shaft 8 of the motor 2. For example, as illustrated in FIG. 3, the torque sensor 3 may be the one that measures the reaction torque conveyed to a stator 21 of the motor 2 facing a rotor 22 of the motor 2. FIG. 3 is a diagram illustrating another arrangement of the torque sensor 3, and the torque sensor 3 is coupled between a member 30 to which the mechanical load 6 is fixed and a housing 20 of the motor 2. The reaction torque conveyed to the stator 21 is conveyed to the torque sensor 3 via the housing 20 to which the stator 21 is fixed, and the reaction torque conveyed to the stator 21 is detected by the torque sensor 3.

The detection signal $T_{fb}$ of the torque sensor 3 may be the one that uses a compensation value taking the mechanical characteristics of the torque sensor 3 into consideration. For example, the torque sensor 3 may be approximated and compensated as a torsion spring, and thus the detection accuracy of the torque can be enhanced.

FIG. 4 is a diagram illustrating a sensor model when the inter-shaft torque sensor 3 illustrated in FIG. 2 is approximated as a torsion spring, and it can be expressed as the following Formula 1. In FIG. 4 and Formula 1, the $T_m$ represents the torque of the motor 2, the $T_{ext}$ represents the torque of the mechanical load 6, the $\omega_L$ represents the mechanical angular velocity of the mechanical load 6, the $\omega_m$ represents the mechanical angular velocity of the motor 2, and the $T_{sensor}$ represents the detection torque of the torque sensor 3. Furthermore, the $J_L$ represents the inertia of the mechanical load 6, the $J_m$ represents the inertia of the motor 2, and the $K_f$ represents the torsional rigidity of the torque sensor 3.

$$T_{sensor} = \frac{J_L K_f}{J_m J_L s^2 + K_f(J_L + J_m)} T_m = G(s)T_m \qquad \cdots (1)$$

Formula 1

Consequently, as expressed in the following Formula 2, by calculating an inverse model of a transfer function of the torque sensor 3 and obtaining a detection torque $T_{sensor}'$ after compensation, the detection accuracy of the torque can be enhanced. For example, the torque sensor 3 may include a compensation unit that calculates the following Formula 2 based on the detection torque $T_{sensor}$ and outputs the detection torque $T_{sensor}'$ after compensation, and may be configured to calculate, by performing the above-described compensation by the compensation unit, the detection torque $T_{sensor}'$ after compensation as the torque detection signal $T_{fb}$. The compensation unit may be separately configured from the portion that outputs the detection torque.

$$T_{sensor}' = \frac{1}{G(s)} T_{sensor} \qquad \cdots (2)$$

Formula 2

The motor control apparatus 4 includes a power conversion unit 11, a current detector 12, and a controller 13. The motor control apparatus 4 converts DC power supplied from a DC power supply 5 into three-phase AC power of an intended frequency and voltage by a known pulse width modulation (PWM) control, and outputs it to the motor 2. The motor control apparatus 4 may include the DC power supply 5.

The power conversion unit 11 is connected between the DC power supply 5 and the motor 2 and supplies to the motor 2 the voltage and the current corresponding to a PWM signal supplied from the controller 13. The power conversion unit 11 is a three-phase inverter circuit including six switching elements connected in a three-phase bridge connection, for example.

The DC power supply 5 may be of a configuration that converts AC power into DC power and outputs it, that is in a configuration in which a rectifier circuit by a diode and a smoothing capacitor are combined, for example. In this case, an AC power supply is connected to the input side of the rectifier circuit.

The current detector 12 detects current (described as output current, hereinafter) that is supplied from the power conversion unit 11 to the motor 2. Specifically, the current detector 12 detects respective instantaneous values of current Iu, Iv, and Iw (described as output current $I_{uvw}$, hereinafter) that flows between the power conversion unit 11 and a U phase, a V phase, and a W phase of the motor 2. The current detector 12 is a current sensor that can detect the current by using a hall element that is a magneto-electric conversion element, for example.

The controller 13 generates and outputs to the power conversion unit 11 the PWM signal for on-off control of the switching elements included in the power conversion unit 11. The controller 13 includes an estimation unit 15 that estimates the position and the velocity of the motor 2 based on the torque detection signal $T_{fb}$ output from the torque sensor 3, and based on the estimated result of the estimation unit 15, the controller 13 generates the PWM signal to be output to the power conversion unit 11.

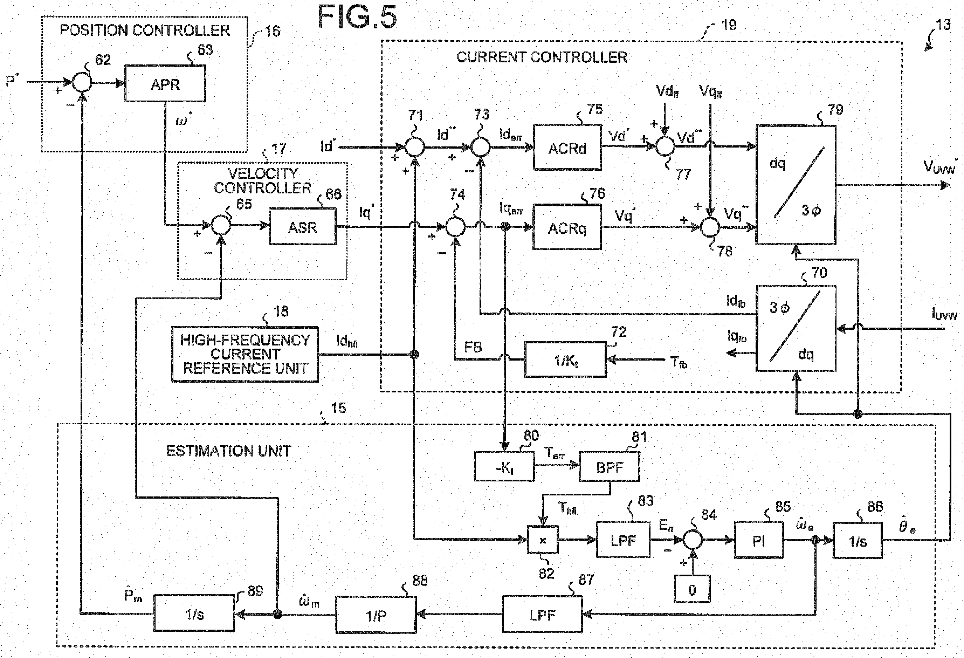

FIG. 5 is a block diagram illustrating an example of the configuration of the controller 13 of the motor control apparatus 4. As illustrated in FIG. 5, the controller 13 includes the estimation unit 15, a position controller 16, a velocity controller 17, a high-frequency current reference unit 18, and a current controller 19.

The controller 13 illustrated in FIG. 5 is a configuration example when positional control is performed on the motor 2 and, when velocity control is performed on the motor 2, the position controller 16 can be omitted. The high-frequency current reference unit 18 may be provided as an external device separately from the motor control apparatus 4.

The estimation unit 15 estimates the position and the velocity of the motor 2 based on the torque detection signal $T_{fb}$ output from the torque sensor 3. The position of the motor 2 estimated by the estimation unit 15 is an electrical angle $\theta_e$ and a mechanical angle $P_m$ of the motor 2. The velocity of the motor 2 estimated by the estimation unit 15 is an electrical angular velocity $\omega_e$ and a mechanical angular velocity $\omega_m$ of the motor 2.

The estimation unit 15 outputs information on the electrical angle $\theta_e$ of the motor 2 that has been estimated as an estimated electrical angle $\theta_e^{\wedge}$, and outputs information on the mechanical angular velocity $\omega_m$ of the motor 2 that has been estimated as an estimated-mechanical angular velocity $\omega_m$^, for example. The estimation unit 15 will be described in detail later.

The position controller 16 includes a subtractor 62 and an automatic position regulating device (APR) 63 and, based on a position reference P* and the estimated-mechanical angular velocity $\omega_m$^, outputs a velocity reference $\omega$* to the velocity controller 17. The subtractor 62 compares the position reference P* with an estimated mechanical angle $P_m$^, and outputs a deviation between the position reference P* and the estimated mechanical angle $P_m$^ to the APR 63. The APR 63 generates and outputs the velocity reference $\omega$* such that the deviation between the position reference P* and the estimated mechanical angle $P_m$^ is zero.

The velocity controller 17 includes a subtractor 65 and an automatic speed-regulating device (ASR) 66 and, based on a velocity reference $\omega$* and the estimated-mechanical angular velocity $\omega_m$^, outputs a q-axis current reference Iq* (a torque current reference) to the current controller 19. The subtractor 65 compares the velocity reference $\omega$* with the estimated-mechanical angular velocity $\omega_m$^, and outputs a deviation between the velocity reference $\omega$* and the estimated-mechanical angular velocity $\omega_m$^ to the APR 66. The APR 66 generates and outputs the q-axis current reference Iq* such that the deviation between the velocity reference $\omega$* and the estimated-mechanical angular velocity $\omega_m$^ is zero.

The high-frequency current reference unit 18 generates a high-frequency current reference $Id_{hfi}$ and outputs it to the current controller 19. The frequency of the high-frequency current reference $Id_{hfi}$ is set higher than the frequency of the voltage that drives the motor 2 and an intended velocity control bandwidth, and is set equal to or lower than a current control frequency.

The current controller 19 includes a three-phase/dq coordinate converter 70, an adder 71, an amplifier 72, subtractors 73 and 74, an ACRd 75, an ACRq 76, adders 77 and 78, and a dq/three-phase coordinate converter 79.

The three-phase/dq coordinate converter 70 performs three-phase/two-phase conversion on the output current $I_{uvw}$ detected by the current detector 12, and further converts it into dq-axis components of an orthogonal coordinate that rotates in accordance with the estimated electrical angle $\theta_e$^. Consequently, the output current $I_{uvw}$ is converted into q-axis current $Iq_{fb}$ that is a q-axis component of the dq-axis rotating coordinate system and into d-axis current $Id_{fb}$ that is a d-axis component of the dq-axis rotating coordinate system. The q-axis current $Iq_{fb}$ corresponds to torque current flowing to the motor 2, and the d-axis current $Id_{fb}$ corresponds to excitation current flowing to the motor 2.

The adder 71 outputs a d-axis current reference Id** that is generated by adding the high-frequency current reference $Id_{hfi}$ to a d-axis current reference Id* (one example of an excitation current reference) to the subtractor 73. The d-axis current reference Id* is set to zero when driving the motor 2 in a constant torque region and, when driving the motor 2 in a constant output region, is set to a value corresponding to the mechanical angular velocity $\omega_m$ of the motor 2, for example.

The subtractor 73 obtains a deviation $Id_{err}$ between the d-axis current reference Id** and the d-axis current $Id_{fb}$ and outputs the deviation $Id_{err}$ to the ACRd 75. The ACRd 75 is one example of an excitation current controller that performs excitation current control for the motor 2. The ACRd 75 generates a d-axis voltage reference Vd* by performing proportional integral (PI) control such that the deviation $Id_{err}$ between the d-axis current reference Id** and the d-axis current $Id_{fb}$ is zero, and outputs the d-axis voltage reference Vd* to the adder 77, for example.

The amplifier 72 generates a feedback signal FB by multiplying the torque detection signal $T_{fb}$ by $1/K_t$, and outputs the feedback signal FB to the subtractor 74. By multiplying the torque detection signal $T_{fb}$ by $1/K_t$, the torque detection signal $T_{fb}$ is converted into a value obtained by current conversion.

The subtractor 74 obtains a deviation $Iq_{err}$ between the q-axis current reference Iq* and the feedback signal FB and outputs the deviation $Iq_{err}$ to the ACRq 76. The ACRq 76 is one example of a torque current controller that performs torque current control for the motor 2. The ACRq 76 generates a q-axis voltage reference Vq* by performing proportional integral (PI) control such that the deviation $Iq_{err}$ between the q-axis current reference Iq* and the q-axis current $Iq_{fb}$ is zero, and outputs it to the adder 78, for example.

When the torque current control is performed based on the deviation between the q-axis current reference Iq* and the q-axis current $Iq_{fb}$, the torque current of high frequency flows to the motor 2 due to an error in the electrical angle $\theta_e$ estimated, and vibration in the torque applied to the output shaft 8 of the motor 2 arises. The vibration in torque increases when the high-frequency current reference $Id_{hfi}$ is increased, and thus a restriction in magnitude of the high-frequency current reference $Id_{hfi}$ arises. Consequently, it becomes susceptible to the detection sensitivity, detection noise, and others of the current detector 12, and because the gain of a phase-locked loop (PLL) for estimating the position and the velocity of the motor 2 cannot be set high, it is difficult to improve the responsiveness, for example.

Meanwhile, the ACRq 76 in the embodiment performs torque current control based on the deviation $Iq_{err}$ between the feedback signal FB based on the torque detection signal $T_{fb}$ and the q-axis current reference Iq*. For this reason, even when there is an error in the electrical angle $\theta_e$ estimated by the estimation unit 15, it can restrain the torque current of high frequency from flowing to the motor 2. By restraining the torque current of high frequency, the vibration in torque applied to the output shaft 8 of the motor 2 can be suppressed, and thus the responsiveness in the estimation of the position and the velocity of the motor 2 can be improved.

Moreover, by setting the cutoff frequency of the torque current control in the ACRq 76 equal to or higher than the frequency of the high-frequency current reference $Id_{hfi}$, it becomes possible to further suppress the torque vibration in a transition state.

The adder 77 adds a d-axis compensation voltage $Vd_{ff}$ to the d-axis voltage reference $Vd^*$ to generate a d-axis voltage reference $Vd^{**}$, and the adder 78 adds a q-axis compensation voltage $Vq_{ff}$ to the q-axis voltage reference $Vq^*$ to generate a q-axis voltage reference $Vq^{**}$. The d-axis compensation voltage $Vd_{ff}$ and the q-axis compensation voltage $Vq_{ff}$ are the ones that compensate the interference and an induced voltage between the d-axis and the q-axis respectively, and are calculated by using the d-axis current $Id_{fb}$, the q-axis current $Iq_{fb}$, motor parameters, and others, for example.

The dq/three-phase coordinate converter 79 converts the d-axis voltage reference $Vq^{**}$ and the q-axis voltage reference $Vq^{**}$ into a three-phase voltage reference $V_{uvw}^*$ by the coordinate transformation based on the estimated electrical angle $\theta_e{}^\wedge$. The three-phase voltage reference $V_{uvw}{}^\wedge$ is input to a PWM signal generator not depicted, and by the PWM signal generator, the PWM signal corresponding to the three-phase voltage reference $V_{uvw}^*$ is generated and is output to the power conversion unit 11.

Next, the configuration of the estimation unit 15 will be described specifically. As illustrated in FIG. 5, the estimation unit 15 includes an amplifier 80, a bandpass filter (BPF) 81, a multiplier 82, low-pass filters (LPFs) 83 and 87, a subtractor 84, a PI controller 85, integrators 86 and 89, and a mechanical-angle calculation unit 88.

The amplifier 80 multiplies the deviation $Iq_{err}$ by $-K_t$ to convert the deviation $Iq_{err}$ into a value $T_{err}$ obtained by torque conversion. The BPF 81 receives the deviation $Iq_{err}$ that has been multiplied by $-K_t$, and extracts a high-frequency component $T_{hfi}$ included in the deviation $Iq_{err}$. In the BPF 81, the filter characteristic is set such that the frequency of the high-frequency current reference $Id_{hfi}$ is included in the passband of the BPF 81.

As in the foregoing, in the controller 13, because the torque current control is performed based on the deviation $Iq_{err}$ between the feedback signal FB and the q-axis current reference $Iq^*$, the vibration in torque applied to the output shaft 8 of the motor 2 by the high-frequency current reference $Id_{hfi}$ is suppressed. Consequently, in the torque detection signal $T_{fb}$, the vibration component by the high-frequency current reference $Id_{hfi}$ is extremely small.

Meanwhile, the vibration component by the high-frequency current reference $Id_{hfi}$ appears in the deviation $Iq_{err}$. Consequently, the estimation unit 15 extracts the high-frequency component $T_{hfi}$ included in the deviation $Iq_{err}$. The high-frequency component $T_{hfi}$ is a q-axis component that arises by the high-frequency current reference $Id_{hfi}$ and is in a magnitude corresponding to the error of the electrical angle $\theta_e$ estimated by the estimation unit 15.

The multiplier 82 multiplies the high-frequency component $T_{hfi}$ output from the BPF 81 and the high-frequency current reference $Id_{hfi}$ input from the high-frequency current reference unit 18 together. The LPF 83 outputs a phase error $E_{rr}$ by performing an averaging process on the multiplication result of the multiplier 82.

Now, the phase error $E_{rr}$ will be described. When the high-frequency current reference $Id_{hfi}$ is superimposed on the d-axis current reference $Id^*$, if there is no error in the estimated electrical angle $\theta_e{}^\wedge$, there is no influence of the high-frequency current reference $Id_{hfi}$ on the q-axis, and thus the high-frequency component $T_{hfi}$ is zero. However, when there is an error in the estimated electrical angle $\theta_e{}^\wedge$ with respect to the electrical angle $\theta_e$, the high-frequency current reference $Id_{hfi}$ affects the q-axis, and the high-frequency component $T_{hfi}$ arises.

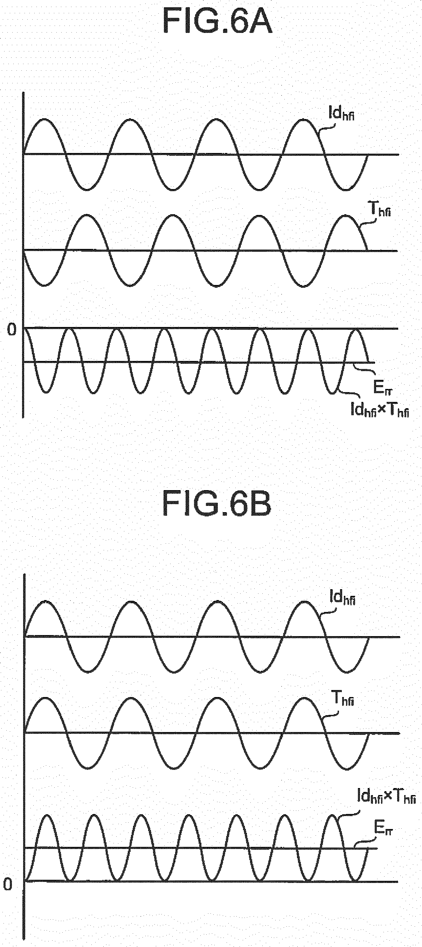

FIGS. 6A and 6B are charts illustrating the relation among the high-frequency current reference $Id_{hfi}$, the high frequency component $T_{hfi}$, and the phase error $E_{rr}$. As illustrated in FIG. 6A, when the estimated electrical angle $\theta_e{}^\wedge$ is delayed by 90 degrees, the high-frequency current reference $Id_{hfi}$ and the high-frequency component $T_{hfi}$ are in opposite phases, and the phase error $E_{rr}$ is of a negative value. As illustrated in FIG. 6B, when the estimated electrical angle $\theta_e{}^\wedge$ is leading by 90 degrees, the high-frequency current reference $Id_{hfi}$ and the high-frequency component $T_{hfi}$ are in the same phase, and the phase error $E_{rr}$ is of a positive value.

Meanwhile, if there is no error in the estimated electrical angle $\theta_e{}^\wedge$, the high-frequency component $T_{hfi}$ is zero, and thus the phase error $E_{rr}$ is zero. Consequently, as illustrated in FIG. 5, in the estimation unit 15 in the embodiment, the subtractor 84 compares the phase error $E_{rr}$ output from the LPF 83 with zero and obtains a deviation between the phase error $E_{rr}$ and zero. The PI controller 85 obtains and outputs an estimated-electrical angular velocity $\omega_e{}^\wedge$ such that the deviation between the phase error $E_{rr}$ and zero is zero. The estimated-electrical angular velocity $\omega_e{}^\wedge$ is an estimated value of the electrical angular velocity $\omega_e$ of the motor 2. The PI controller 85 further functions as a PLL. The configuration of the PLL is not limited to the PI control, and it can be configured by appropriately combining the control such as proportion (P), differential (D), integration (I), and double integration (I2).

The integrator 86 integrates the estimated-electrical angular velocity $\omega_e{}^\wedge$ and obtains and outputs an estimated electrical angle $\theta_e{}^\wedge$. The estimated electrical angle $\theta_e{}^\wedge$ is an estimated value of the estimated electrical angle $\theta_e$ of the motor 2.

The LPF 87 removes noise from the estimated-electrical angular velocity $\omega_e{}^\wedge$ to output the resultant to the mechanical-angle calculation unit 88. The mechanical-angle calculation unit 88 obtains the estimated-mechanical angular velocity $\omega_m{}^\wedge$ by dividing the estimated-electrical angular velocity $\omega_e{}^\wedge$ by the number of poles of the motor 2. The integrator 89 integrates the estimated-mechanical angular velocity $\omega_m{}^\wedge$ from the mechanical-angle calculation unit 88 to output the estimated mechanical angle $P_m{}^\wedge$ as an estimated value of the mechanical angle $P_m$.

As in the foregoing, the estimation unit 15 estimates the position and the velocity of the motor 2 by using the torque detection signal $T_{fb}$. Consequently, the motor drive system 1 and the motor control apparatus 4 that are novel and excellent in environmental durability can be provided.

When the velocity of the motor 2 is low and the induced voltage is low, it is difficult to estimate the position and the velocity of the motor 2 based on the induced voltage. However, in the motor control apparatus 4 in the embodiment, even when an induced voltage of the motor 2 does not arise, the position and the velocity of the motor 2 can be estimated easily.

Furthermore, because the torque current control is performed based on the deviation $Iq_{err}$ between the feedback signal FB based on the torque detection signal $T_{fb}$ and the q-axis current reference $Iq^*$, the torque current of high frequency can be restrained from flowing to the motor 2. Thus, by increasing the high-frequency current reference $Id_{hfi}$, the influence of the detection sensitivity and detection noise of the current detector 12 can be suppressed. Consequently, because the responsiveness can be improved by increasing the PLL gain for estimating the position and the velocity of the motor 2, the improvement in operation performance can be achieved by suppressing the torque ripples and the velocity ripples.

In the above-described example, in the motor control apparatus 4, the position and the velocity of the motor 2 have been estimated. However, it may be configured to estimate at least one of the position and the velocity of the motor 2.

The motor control apparatus 4 in the embodiment feeds back the torque directly, and thus it further has an effect of suppressing torque disturbances such as the cogging and the distortion in torque constant. Consequently, the motor control apparatus 4 is able to perform the torque control with high precision, and can accurately drive the coupled mechanical load 6.

Other Embodiments

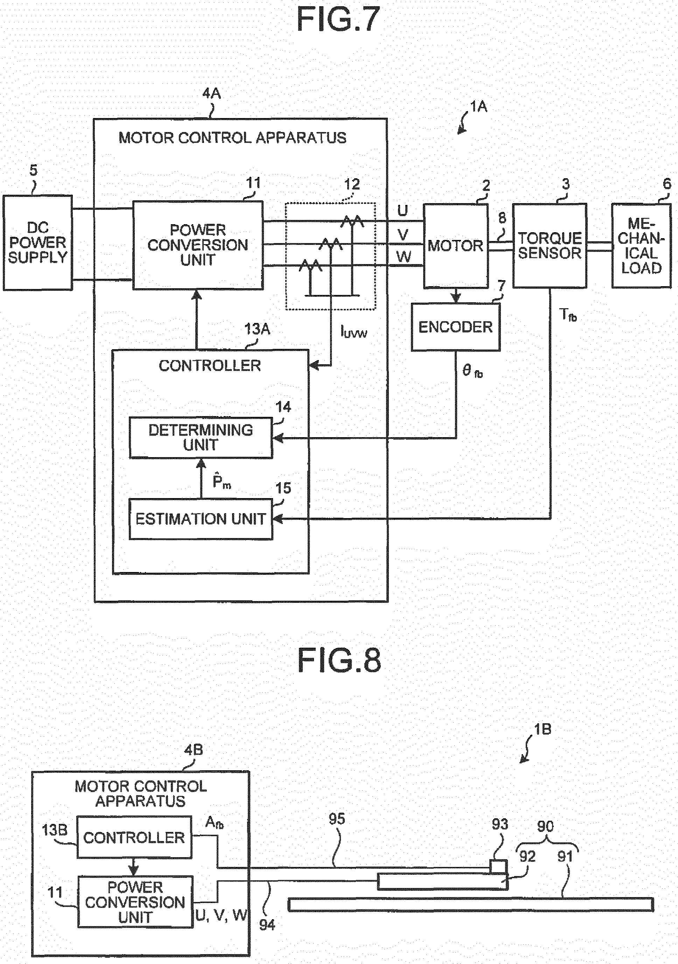

The other embodiments of the motor drive system 1 will be described. FIG. 7 is an explanatory block diagram illustrating a motor drive system according to another embodiment. In the following description, the elements that are different from those of the motor drive system 1 are mainly described and, for the constituent elements having the same functions as those of the motor drive system 1, their descriptions are omitted or their explanations are omitted by giving the identical reference signs.

A motor drive system 1A illustrated in FIG. 7 further includes, in addition to the configuration of the motor drive system 1, an encoder 7 that can detect the position of the motor 2. A motor control apparatus 4A further includes a determining unit 14.

The determining unit 14 receives a position detection signal $\theta_{fb}$ from the encoder 7 and the estimated mechanical angle $P_m{}^\wedge$ output from the estimation unit 15 and, when the difference between the position detection signal $\theta_{fb}$ and the estimated mechanical angle $P_m{}^\wedge$ is equal to or greater than a certain value, determines that the encoder 7 is abnormal.

A controller 13A controls the motor 2 by using the position detection signal $\theta_{fb}$ from the encoder 7 as a position feedback signal when there is no abnormality in the encoder 7. In contrast, when it is determined that there is abnormality in the encoder 7, the controller 13A controls the motor 2 by using the estimated mechanical angle $P_m{}^\wedge$ and the estimated-mechanical angular velocity $\theta_m{}^\wedge$ estimated by the estimation unit 15.

By such a configuration, in the motor drive system 1A, even when malfunction occurs in the encoder 7 that has been used in the motor control, the motor control based on the torque sensor 3 is enabled, and thus a fail-safe function can be implemented at low cost.

The motor drive system 1 or 1A in the embodiments, as in the foregoing, can be applied regardless of a specific type even when the permanent magnet of the motor 2 is of an embedded type or a surface-mount type. Consequently, for example, the use of an SPM motor of a high power density in which permanent magnets are bonded on the surface of the rotor becomes possible, and that contributes to the downsizing of the motor 2 also.

In the foregoing, the examples in which the motor drive system 1 or 1A is applied to the robot 100 have been exemplified. However, it can be applied to various apparatuses and systems that are driven by the motor 2.

Furthermore, in the above-described embodiments, the motor 2 has been exemplified with a rotary motor such as a permanent magnet synchronous motor as one example. The motor 2, however, is not limited to the rotary motor, and may be a linear motor. In this case, an acceleration sensor is used in place of the torque sensor 3.

FIG. 8 is a diagram illustrating the configuration of a motor drive system using a linear motor. A motor drive system 1B illustrated in FIG. 8 includes a motor control apparatus 4B, a linear motor 90, and an acceleration sensor 93. The linear motor 90 includes a stator 91 and a movable element 92. The stator 91 is configured with permanent magnets being arrayed. The movable element 92 is configured with armature coils being arrayed, and the acceleration sensor 93 is mounted thereon. The movable element 92 moves along the extending direction of the stator 91.

The motor control apparatus 4B includes the power conversion unit 11 and a controller 13B. The power conversion unit 11 supplies to the movable element 92 of the linear motor 90 the voltage and current corresponding to a PWM signal supplied from the controller 13A via a power line 94. Thus, the position and the velocity of the movable element 92 is controlled. The controller 13B acquires an acceleration detection signal $A_{fb}$ output from the acceleration sensor 93 via a signal line 95 and, based on the position and the velocity of the linear motor 90 which are estimated based on the acceleration detection signal $A_{fb}$, generates the PWM signal to be output to the power conversion unit 11.

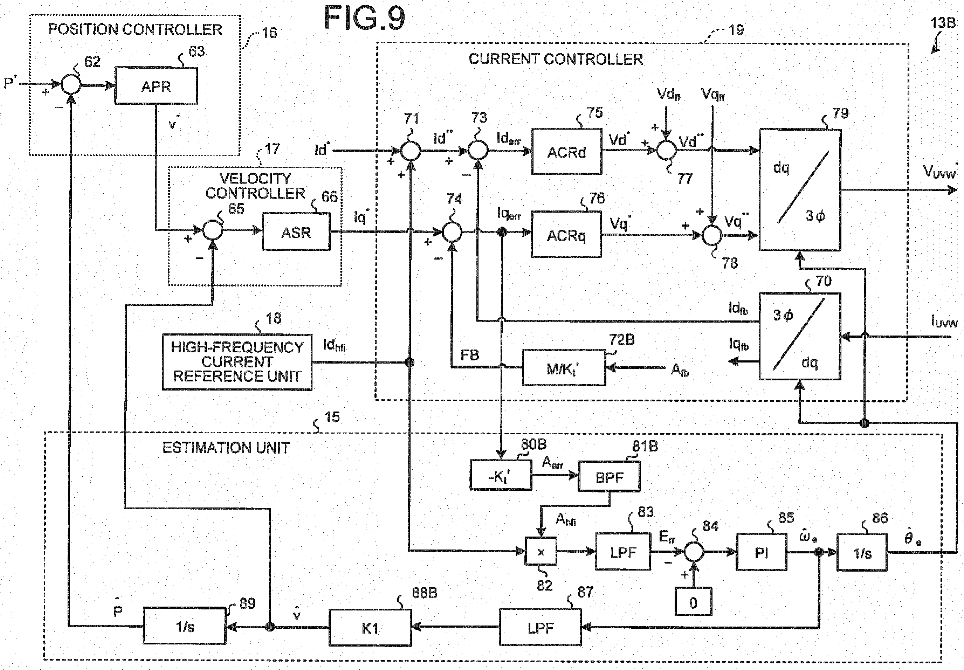

FIG. 9 is a block diagram illustrating an example of the configuration of the controller 13B. As illustrated in FIG. 9, the controller 13B includes amplifiers 72B, 80B, and 88B, and a BPF 81B, in place of the amplifiers 72 and 80, the mechanical-angle calculation unit 88, and the BPF 81 of the controller 13 illustrated in FIG. 5. The amplifier 72B generates a feedback signal FB by multiplying the acceleration detection signal $A_{fb}$ by $M/K_t'$, and outputs such a feedback signal FB to the subtractor 74. By multiplying the acceleration detection signal $A_{fb}$ by $M/K_t'$, the acceleration detection signal $A_{fb}$ is converted into a value obtained by current conversion. The M is the mass of the movable element 92.

The amplifier 80B multiplies the deviation $Iq_{err}$ by $-K_t'$ to convert the deviation $Iq_{err}$ into a value $A_{err}$ obtained by acceleration conversion. The BPF 81B receives the deviation $Iq_{err}$ that has been multiplied by $-K_t'$, and extracts a high-frequency component $A_{hfi}$ included in the deviation $Iq_{err}$. In the BPF 81B, the filter characteristic is set such that the frequency of the high-frequency current reference $Id_{hfi}$ is included in the passband of the BPF 81B.

The amplifier 88B makes the estimated-electrical angular velocity $\omega_e{}^\wedge$, the noise of which has been removed, K1-fold and converts it to an estimated velocity $v^\wedge$. The K1 is a conversion coefficient between the electrical angular velocity $\omega_e$ and the movable element 92, and is set to a value corresponding to a mechanical configuration such as a magnetic pole pitch, for example. The integrator 89 integrates the estimated velocity $v^\wedge$ and outputs an estimated position $P^\wedge$ as an estimated value of a position P. The position controller 16 generates a velocity reference $v^*$ such that a deviation between the estimated position $P^\wedge$ and the position reference $P^*$ is zero, and the velocity controller 17 generates the q-axis current reference $Iq^*$ such that a deviation between the velocity reference $v^*$ and the estimated velocity $v^\wedge$ is zero.

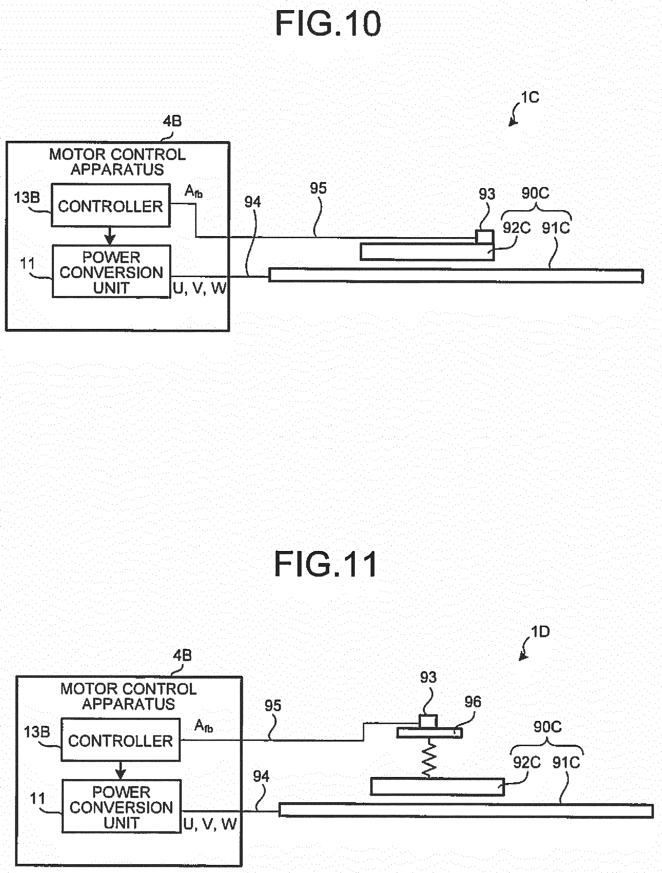

In the linear motor 90 illustrated in FIG. 8, it is of a configuration that the coils are provided on the movable element 92. However, the coils may be provided on the stator. FIG. 10 is a diagram illustrating the configuration of another motor drive system using a linear motor. In a motor drive system 1C illustrated in FIG. 10, armature coils are arrayed on a stator 91C of a linear motor 90C, and permanent magnets are arrayed on the movable element 92 of the linear motor 90C. The motor control apparatus 4B then provides to the stator 91C of the linear motor 90C the voltage and the current corresponding to the PWM signal from the power conversion unit 11, and controls the position and the velocity of the movable element 92C.

In the examples illustrated in FIGS. 8 and 10, the acceleration sensor 93 has been mounted on the movable element 92 or 92C of the linear motor 90 or 90C. However, as in a motor drive system 1D illustrated in FIG. 11, the acceleration sensor 93 may be mounted on a load 96 of a vibration system that is fixed to a movable element. FIG. 11 is a diagram illustrating the configuration of another motor drive system using a linear motor. In this case, the acceleration detection signal $A_{fb}$ of the acceleration sensor 93 can also be used for vibration suppression of the load 96.

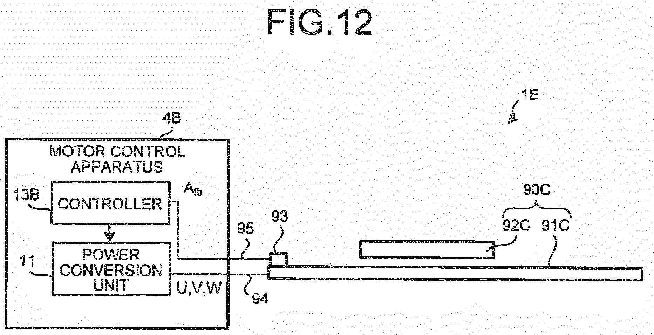

When the reaction can be used, as in a motor drive system 1E illustrated in FIG. 12, the acceleration sensor 93 may be mounted on the stator 91C. FIG. 12 is a diagram illustrating the configuration of another motor drive system using a linear motor. In the motor drive systems 1D and 1E illustrated in FIGS. 11 and 12, the configuration that armature coils are arrayed on the stator 91C has been described as one example. However, it can be applied also to a motor drive system of the configuration illustrated in FIG. 8 in which the armature coils are arrayed on the movable element.

In the above-described examples, in the motor control apparatus 4B, the position and the velocity of the linear motor 90 have been estimated. However, it may be configured to estimate at least one of the position and the velocity of the linear motor 90.

Further effects and modifications can easily be derived by those skilled in the art. Thus, a broader aspect of the present invention is not limited to the specific details and representative embodiments as expressed and described above. Therefore, various modifications can be made without departing from the spirit and scope of the comprehensive concept of the invention defined by the accompanying claims and the equivalents thereof.

Reference Signs List

1, 1A to 1E     Motor drive system

| 2 | Motor |
| 3 | Torque sensor |
| 4, 4A, 4B | Motor control apparatus |
| 6 | Mechanical load |
| 13, 13A, 13B | Controller |
| 15 | Estimation unit |
| 16 | Position controller |
| 17 | Velocity controller |

| 18 | High-frequency current reference unit |
| 19 | Current controller |
| 100 | Robot |

**Claims**

1. A motor drive system comprising:

  a motor;
  a motor control apparatus configured to control the motor; and
  a sensor configured to detect torque or acceleration of the motor,
  the motor control apparatus comprising:

    a torque current controller configured to perform torque current control on the motor based on a deviation between a feedback signal based on a detection result of the sensor and a torque current reference,
    an excitation current controller configured to perform excitation current control on the motor based on an excitation current reference on which a high-frequency current reference is superimposed, and
    an estimation unit configured to estimate a position or a velocity of the motor based on the deviation between the feedback signal and the torque current reference and on the high-frequency current reference.

2. The motor drive system according to claim 1, wherein the motor is a rotary motor, and
  the sensor is a torque sensor.

3. The motor drive system according to claim 2, wherein the torque sensor is disposed between an output shaft of the rotary motor and a load, or between the rotary motor and a member that fixes the load.

4. The motor drive system according to claim 1, wherein the motor is a linear motor, and
  the sensor is an acceleration sensor.

5. The motor drive system according to claim 4, wherein the acceleration sensor is mounted on a movable element or a stator of the linear motor.

6. The motor drive system according to any one of claims 1 to 5, wherein the estimation unit estimates the position or velocity of the motor based on a multiplication result of a high frequency component included in the deviation and the high-frequency current reference.

7. The motor drive system according to any one of claims 1 to 6, wherein a cutoff frequency of the torque current control is set to a frequency equal to or higher than the high-frequency current reference.

8. A motor control apparatus comprising:

  a torque current controller configured to perform torque current control on a motor based on a deviation between a feedback signal based on a detection result of a sensor configured to detect torque or acceleration of the motor and a torque current reference;
  an excitation current controller configured to perform excitation current control on the motor based on an excitation current reference on which a high-frequency current reference is superimposed; and
  an estimation unit configured to estimate a position or a velocity of the motor based on the deviation between the feedback signal and the torque current reference and on the high-frequency current reference.

# FIG.1

# FIG.2

# FIG.3

# FIG.4

FIG.5

# FIG.6A

# FIG.6B

EP 3 032 735 A1

# FIG.7

# FIG.8

14

# FIG.9

EP 3 032 735 A1

# FIG.10

MOTOR CONTROL
APPARATUS

4B

13B    CONTROLLER    $A_{fb}$

11    POWER
CONVERSION
UNIT    U, V, W

1C

94    95    93    90C

92C    91C

# FIG.11

MOTOR CONTROL
APPARATUS

4B

13B    CONTROLLER    $A_{fb}$

11    POWER
CONVERSION
UNIT    U, V, W

1D

95    93    96

94    90C

92C    91C

# FIG.12

1E

4B

MOTOR CONTROL
APPARATUS

13B | CONTROLLER | A$_{fb}$

11 | POWER
CONVERSION
UNIT | U,V,W

95

93

94

90C

92C  91C

## INTERNATIONAL SEARCH REPORT

| International application No. |
| --- |
| PCT/JP2013/071673 |

A. CLASSIFICATION OF SUBJECT MATTER
*H02P29/00*(2006.01)i

According to International Patent Classification (IPC) or to both national classification and IPC

B. FIELDS SEARCHED

Minimum documentation searched (classification system followed by classification symbols)
H02P29/00

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-11709 A (JTEKT Corp.),<br>14 January 2010 (14.01.2010),<br>paragraphs [0012], [0019] to [0022], [0063] to [0076]; fig. 12<br>& US 2011/0098888 A1      & EP 2296264 A1<br>& WO 2010/001579 A1      & CN 102067438 A | 1-8 |
| A | JP 2010-29030 A (JTEKT Corp.),<br>04 February 2010 (04.02.2010),<br>paragraphs [0030] to [0031], [0061] to [0062]; fig. 1<br>(Family: none) | 1-8 |
| A | JP 2011-160574 A (Meidensha Corp.),<br>18 August 2011 (18.08.2011),<br>paragraphs [0011] to [0037]; fig. 1<br>(Family: none) | 1-8 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 October, 2013 (15.10.13) | 29 October, 2013 (29.10.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/071673

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-70496 A  (Hitachi Automotive Systems, Ltd.), 18 April 2013 (18.04.2013), paragraphs [0009] to [0029]; fig. 1 to 6 (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009095154 A

- JP 2012228128 A